# EUROPÄISCHE PATENTANMELDUNG

(11) **EP 0 882 625 A2**
(43) Veröffentlichungstag der Anmeldung: **09.12.1998**
(21) Anmeldenummer: 98110331.0
(22) Anmeldetag: 05.06.1998
(51) Int. Cl.: B60R 21/20

(54) **Airbag-Vorrichtung**

(30) Priorität: 06.06.1997 DE 19724029
(71) Anmelder: TAKATA (EUROPE) VEHICLE SAFETY TECHNOLOGY GmbH, 89081 Ulm (DE)
(72) Erfinder: Müller, Frank, 97618 Wollbach (DE); Klingauf, Gerhard, 88481 Balzheim (DE)
(74) Vertreter: Schmidt, Christian

(57) **Zusammenfassung**

Die Erfindung betrifft eine Airbag-Vorrichtung bestehend aus einem aufbrechbaren Behälter (11), an dessen Boden (12) ein Gasgenerator (13) und ein in ihm untergebrachter zusammengefalteter Gassack (14) befestigt sowie nach außen vorstehende Befestigungsmittel (15) zum Anbringen des Behälters (11) an einem Fahrzeuglenkrad (16) vorgesehen sind. Erfindungsgemäß ist die Ausbildung so, daß die Befestigungsmittel (15) aus einer am Boden (12) des Behälters (11) befestigten Schnappmitteln (18) bestehen, die unmittelbar in eine zugeordnete Bohrung (17) des Lenkrades (16) einrastbar sind, zwischen der Befestigungsstelle der Befestigungsmittel (15) am Behälter (11) und den Schnappmitteln (18) eine Sollbruchstelle (19) aufweisen und nach Aufbrechen der Sollbruchstelle (19) bei ausgelöstem Gasgenerator (13) durch ein Haltemittel (20) bezüglich ihrer Verriegelungsposition am Rand der Bohrung (17) fixierbar sind.

## Beschreibung

Die Erfindung betrifft eine Airbag-Vorrichtung nach dem Oberbegriff des Patentanspruchs 1.

Derartige Airbag-Vorrichtungen sind z.B. aus der EP 0 694 442 A1 bekannt. Sie werden insbesondere zentral am Lenkrad eines Kraftfahrzeuges befestigt, damit der sich bei unfallbedingten Beschleunigungen nach Aufbrechen des Behälters aufblähende Gassack sich in einer optimalen Position relativ zum Fahrer befindet. Im allgemeinen wird der den zusammengefalteten Gassack enthaltende Behälter axial federnd am Lenkrad befestigt, wobei Kontaktpaare zwischen dem Gassackbehälter und dem Lenkrad es gestatten, beim federnden Niederdrücken des Behälters relativ zum Lenkrad den Hupenstromkreis zu schließen. Auf diese Weise kann der Gassackbehälter gleichzeitig als Betätigungsknopf für die Fahrzeughupe dienen.

Ein Problem bei derartigen Airbag-Vorrichtungen besteht darin, den Gassackbehälter schnell und gleichwohl so sicher am Fahrzeuglenkrad zu befestigen, daß auch bei einer Auslösung des Gasgenerators keine Gefahr einer vollständigen Lösung des Behälters vom Lenkrad besteht.

Das Ziel der Erfindung besteht darin, eine Airbag-Vorrichtung der eingangs genannten Gattung zu schaffen, welche auf einfachste Weise am Fahrzeuglenkrad befestigt werden kann, wobei gleichwohl jede Gefahr ausgeschaltet ist, daß sich die Airbag-Vorrichtung bei im Falle unfallbedingter Beschleunigungen auftretendem Auslösen des Gasgenerators vom Fahrzeuglenkrad löst.

Zur Lösung dieser Aufgabe sind die Merkmale des kennzeichnenden Teils des Anspruches 1 vorgesehen.

Der Erfindungsgedanke ist also darin zu sehen, daß man für die Befestigung des den Gassack und den Gasgenerator enthaltenden aufbrechbaren Behälters eine an sich bekannte Schnappverbindung verwendet, bei der die Schnappmittel einfach in geeignete Bohrungen insbesondere in den Speichen des Lenkrads so weit eingeschoben werden, daß sie in Schnappeingriff mit dem Lenkrad kommen und so gegen Herausziehen selbsttätig verriegelt sind. Da die Schnappmittel jedoch funktionsbedingt federnd nachgiebig sind, besteht bei den im Falle einer Auslösung des Gasgenerators auftretenden hohen Belastung eine gewisse Gefahr, daß die Schnappmittel trotz ihrer Verriegelung am Rand der Lenkradbohrung sich lösen. Dies wird durch die erfindungsgemäß vorgesehene Solltrennstelle, insbesondere. Sollbruchstelle verhindert. Der nach der Solltrennung in der Bohrung des Lenkrads verbleibende Teil der Schnappmittel dient dann als Anschlag für das Haltemittel.

Bevorzugt erfolgt die Verbindung des Gassackbehälters mit dem Lenkrad derart, daß in jeder Speiche des Lenkrades eine Bohrung für ein zugeordnetes Befestigungsmittel des Gassackbehälters vorgesehen ist. Bei einem Drei-Speichen-Lenkrad sind also am Boden des Gassackbehälters drei erfindungsgemäße Befestigungsmittel angeordnet, die in jeweils eine zugeordnete Bohrung in einer Speiche des Lenkrades eingeschnappt werden.

Besonders bevorzugte praktische Ausführungsformen der Erfindung entnimmt man den Ansprüchen 2 bis 9.

Durch die Ausbildung nach den Ansprüchen 10 bis 12 kann der problemlos unmittelbar in Bohrungen des Lenkrades befestigte Gassackbehälter gleichzeitig als Hupenbetätigungsmittel verwendet werden.

Aus Herstellungsgründen und um die erforderliche Elastizität zu gewährleisten, sollen die Schnappmittel nach Anspruch 13 aus Kunststoff bestehen. Die Herstellung der Schnappmittel aus Kunststoff hat weiter den Vorteil, daß das Lenkrad von den Metallteilen des Behälters elektrisch isoliert wird, wodurch es möglich ist, daß die Hupenkontakte ohne Rücksicht auf eine elektrische Isolation am Behälter bzw. dem Lenkrad angebracht werden können.

Die Verwendung von Kunststoff insbesondere im Zusammenwirken mit der Rückstellfeder vermeidet auch ein Klappern der Airbag-Vorrichtung am Lenkrad. Die erfindungsgemäße Schnapphülse gewährleistet auch eine gute Linearführung des Behälters am Lenkrad bei der Relativbewegung während eines Hupvorganges. Die Verwendung von Kunststoff führt auch dazu, daß die erfindungsgemäße Airbag-Vorrichtung geräuscharm und wartungsfrei ist.

Die erfindungsgemäßen Schnappmittel, insbesondere Schnapphaken müssen lediglich so fest ausgebildet und geformt sein, daß sie ein zufälliges oder mißbräuchliches Wegziehen des Behälters vom Lenkrad verhindern und im übrigen der Rückstellfederkraft sicher widerstehen können. Bei einer unfallbedingten Auslösung des Gasgenerators hingegen übernimmt der erst dann wirksam werdende Haltebolzen die Sicherung des Behälters bzw. des Behälterbodens am Lenkrad, so daß keine Gefahr besteht, daß der Behälter mit dem sich aufblähenden Gassack sich unkontrolliert im Fahrgastraum umherbewegt.

Die zwischen dem Behälter bzw. der Schnapphülse und dem Lenkrad vorgesehene Rückstellfeder hat eine Doppelfunktion, indem sie einerseits die Schnappmittel, insbesondere Schnapphaken in klapperfreien Eingriff mit dem Rand der Bohrung des Lenkrades bringt und andererseits die Funktion des Gassackbehälters als Hupenbetätigungsknopf erlaubt.

Die die Fixierung der Schnappmittel in der Verriegelungsposition gewahrleistenden Spreizmittel sollen dagegen zweckmäßigerweise gemäß Anspruch 14 aus Metall hergestellt sein.

Die Erfindung wird im folgenden beispielsweise anhand der Zeichnung beschrieben; in dieser zeigt:
- Figur 1: eine schematische Draufsicht auf ein Fahrzeuglenkrad mit einer daran angeordneten Airbag-Vorrichtung gemäß der Erfindung,
- Figur 2: eine vergrößerte schematische Schnittansicht nach Linie II-II in Figur 1,
- Figur 3: einen vergrößerten Ausschnitt einer Schnittansicht einer erfindungsgemäßen Airbag-Vorrichtung im Bereich der Befestigung an einer Speiche eines Lenkrades,
- Figur 4: eine ähnliche Schnittansicht einer weiteren Ausführungsform,
- Figur 5: eine schematische, ausschnittsweise Seitenansicht einer erfindungsgemäßen Airbag-Vorrichtung im Bereich eines von mehreren Befestigungsmitteln vor dem Einbau in ein Fahrzeug,
- Figur 6: eine entsprechende ausschnittsweise Seitenansicht der Airbag-Vorrichtung nach Figur 5 nach dem Einschnappen in eine Speiche eines Lenkrades und
- Figur 7: eine ausschnittsweise schematische Seitenansicht analog den Figuren 5, 6, nach dem Auslösen des Gasgenerators und des dabei erfolgten Bruches der erfindungsgemäßen Sollbruchstelle.

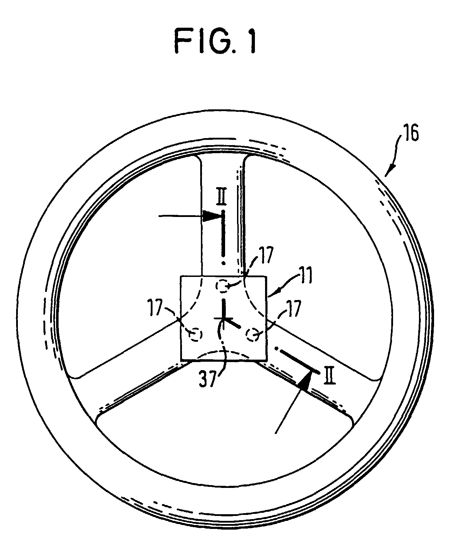

Nach den Figuren 1 bis 3 weist ein z.B. aus Kunststoff bestehender Behälter 11 mit einem aufbrechbaren Deckel 32 einen Boden 12 auf, der an einem wannenartigen Blechteil 33 ausgebildet ist. In einer zentralen Bohrung 34 des Blechteils 33 ist ein Gasgenerator 13 befestigt, der bei Auslösung im Falle unfallbedingter Beschleunigungen des Fahrzeuges durch Gasauslaßöffnungen 35 Gas ausströmen läßt, welches einen im Innern des Behälters 11 untergebrachten zusammengefalteten Gassack 14 nach Aufbrechen des Deckels 32 zum Schutz des Fahrers aufbläht. Der Gassack 14 weist eine zentrale Öffnung auf, an deren Umfang der beispielsweise mittels eines Gegenbleches 36 gegen das wannenartige Blechteil 33 verspannt ist, so daß der mit den Gasauslaßöffnungen 35 in Strömungsverbindung stehende Innenraum des Gassackes 14 bis auf die nicht dargestellten Abströmöffnungen nach außen weitgehend abgedichtet ist.

Nach Figur 1 weist das Lenkrad 16 drei Speichen auf, in jeder von denen nahe der Mittelachse 37 Bohrungen 17 vorgesehen sind, in welche am Boden 12 des Behälters 11 angebrachte Befestigungsmittel 15 im Schnappeingriff eingreifen.

Die Befestigungsmittel 15 bestehen jeweils aus einer Schnapphülse 18, die an ihren dem Boden 12 zugewandten Ende einen Ringflansch 31 aufweist und in dem vom Ringflansch 31 abgewandten Endbereich eine Ringanordnung von axial verlaufenden Federarmen 38 besitzt, die an ihren freien Enden radial nach außen weisende Schnapphaken 21 tragen, die jeweils mit radial äußeren Einlaufschrägen 39 versehen sind.

Zwischen dem sich an den Ringflansch 31 anschließenden Teil 18' der Schnapphülse 18 und dem die Federarme 38 und Schnapphaken 21 tragenden Teil befindet sich eine als Ringnut ausgebildete Sollbruchstelle 19.

Die Zentralbohrung der Schnapphülse 18 weist drei Bereiche auf, und zwar einen im Bereich der Federarme 38 verlaufenden Bereich 18a großen Durchmessers, der ein Einfedern der Federarme 38 gewährleistet, einen mittleren Führungsbereich 18b kleineren Durchmessers für einen aus Metall bestehenden zentralen Haltebolzen 20 und einen über eine nach innen vorspringende Ringstufe anschließenden weiter verjüngten Endbereich 18c, in den ein im Anschluß an eine entsprechende Ringstufe 24 im Befestigungsendbereich 23 des Haltebolzens 20 vorgesehener Befestigungszapfen 26 eingreift, der beim beschriebenen Ausführungsbeispiel ein Außengewinde aufweist und durch Bohrungen 25 im Boden 12 des Behälters 11 hindurch bis in das Innere des Behälters 11 reicht, wo eine Mutter 27 zwecks Befestigung der Schnapphülse 18 am Boden 12 aufgeschraubt ist.

Der Haltebolzen 20 weist im Bereich 18a allseitig einen solchen Abstand von den federnden Armen 38 mit den Schnapphaken 21 auf, daß die Federarme 38 ausreichend weit radial nach innen wegfedern können. Erfindungsgemäß weist der Haltebolzen 20 an seinem vom Befestigungszapfen 26 abgewandten Ende einen sich zur Schnapphülse 18 hin verjüngenden Kopf 22 auf, der mit Schrägflächen 40 an den radial innen gelegenen Seiten der Schnapphaken 21 zusammenwirkt.

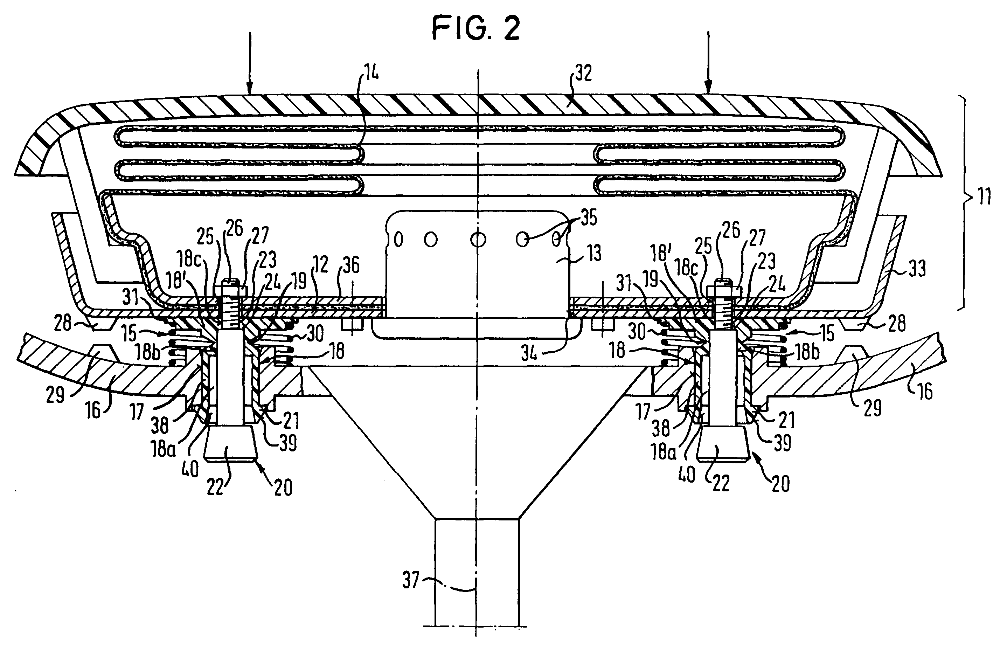

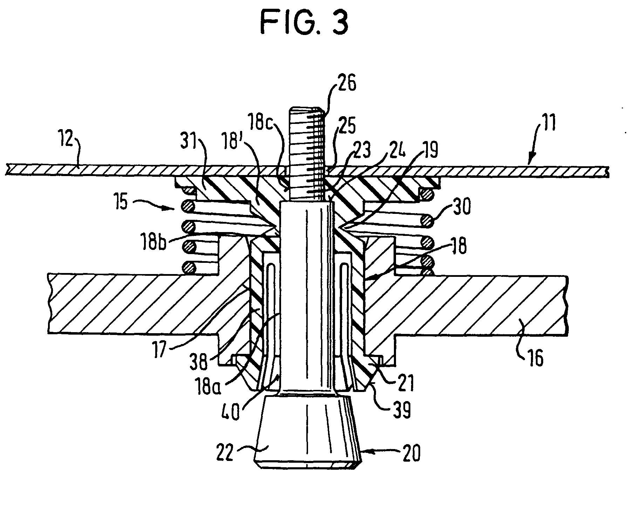

Die Schnapphaken 21 liegen an den in Figur 2 und 3 unteren Rändern der Bohrungen 17 derart an, daß der Behälter 11 am Lenkrad 16 festgehalten wird. Diese Anlage wird dadurch gewährleistet, daß zwischen dem Flansch 31 der Schnapphülse 18 und der dem Behälter 11 zugewandten Oberfläche der Speichen des Lenkrades 16 eine Schraubendruckfeder 30 vorgesehen ist, welche den Behälter 11 und das Lenkrad 16 auf einen durch die Schnapphaken 21 bestimmten Abstand hält.

Nahe jeder Schnapphülse 18 sind nach Fig. 2 am Boden 12 des Behälters 11 bzw. den Speichen des Lenkrades 26 gegeneinander isolierte Kontakte 28 bzw. 29 befestigt, die normalerweise, d.h. bei der Position nach Figur 2 einen Abstand voneinander aufweisen, jedoch beim Niederdrücken des Behälters 11 in Richtung der Pfeile in Figur 2 in Eingriff kommen, wobei die Federn 30 zusammengedrückt werden und die Schnapphaken 21 von der zugeordneten Haltefläche am Lenkrad 16 abheben. Diese Bewegung kann zur Schließung eines Hupenstromkreises ausgenutzt werden.

Die Funktion der anhand der Figuren 1 bis 3 beschriebenen Airbag-Vorrichtung ist wie folgt:

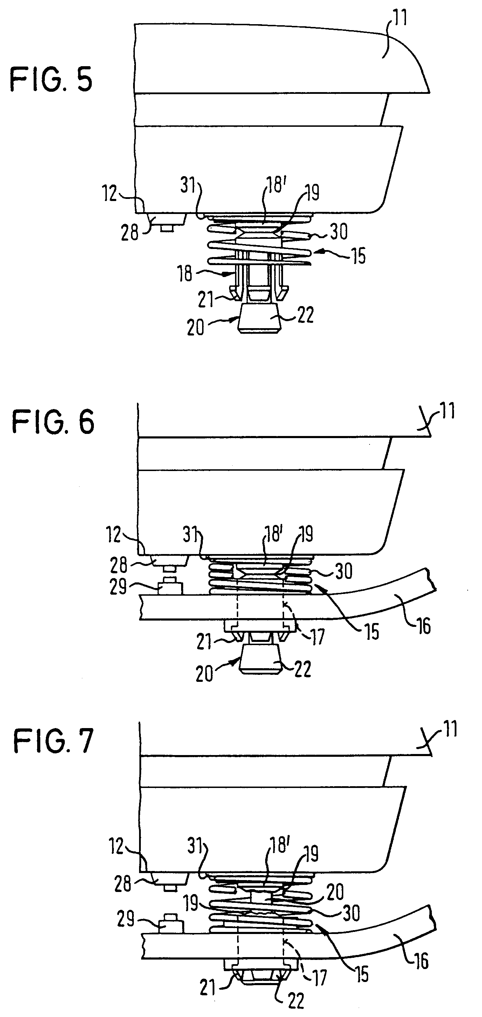

Zunächst wird die Airbag-Vorrichtung einschließlich der Schnapphülsen 18 und Haltebolzen 20 vormontiert, worauf sie das Aussehen gemäß Figur 5 hat. Alle Bauelemente der Airbag-Vorrichtung sind unverlierbar angeordnet, bilden also eine komplett vormontierte Baueinheit, die bis zum Einschnappen in das Lenkrad und auch danach einheitlich gehandhabt werden kann.

In diesem Zustand werden die Schnapphülsen 18 von oben in die entsprechend vorgesehenen Bohrungen 17 der Speichen eines Lenkrades 16 eingedrückt, wobei die Einlaufschrägen 39 auf Eingangsschrägen der Bohrungen 17 entlangrutschen und dabei die Federarme 38 radial nach innen drücken, bis die Schnapphaken 21 durch die Bohrungen 17 hindurchpassen. Nunmehr werden die Schnapphülsen 18 so weit in die Bohrungen 17 eingedrückt, bis die Schnapphaken 21 nach den Figuren 2, 3 und 6 hinter den unteren Rand der Bohrungen 17 greifen können und durch die ihnen innewohnende Federwirkung in diese Position überführt werden. Hierbei kommen die Kontaktpaare 28, 29 selbsttätig in die aus den Figuren 2 und 6 ersichtliche Relativposition, in der sie einander mit Abstand gegenüberliegen.

Auf einfachste Weise kann somit die Airbag-Vorrichtung mit dem Behälter 11 am Lenkrad 16 befestigt werden.

Sofern nun bei einer unfallbedingten Beschleunigung der Gasgenerator 13 ausgelöst, der Deckel 32 des Behälters 11 aufgebrochen und der Gassack 14 aufgebläht wird, kommt es zu einer schlagartigen Belastung des Bodens 12 von der Lenksäule 16 weg. Die Sollbruchstellen 19 sind erfindungsgemäß nun so dimensioniert, daß sie aufgrund dieser schlagartigen Belastung brechen, bevor sich die Schnapphaken 21 aus ihrer Verriegelungsposition nach den Figuren 2 und 6 lösen können.

Nunmehr kann sich der obere Teil 18' der Schnapphülse 18 zusammen mit dem Behälter 11 bzw. dem Boden 12 vom die Schnapphaken 21 tragenden Teil getrennt gemäß Figur 7 in Richtung des dortigen Pfeiles vom Lenkrad 16 weg bewegen, wobei der Haltebolzen 20 mitgenommen wird und schließlich mit seinem konusartigen Kopf 22 an den radial inneren Schrägflächen 40 der Schnapphaken 21 zur Anlage kommt und so ein Einfedern der Federarme 38 radial nach innen unmöglich macht. Gleichzeitig wird durch das Anpressen der Federarme 38 radial nach außen an den Umfang der Bohrung 17 eine einwandfreie axiale Abstützung für den Haltebolzen 20 geschaffen, wodurch gemäß Figur 7 eine weitere Entfernung des Bodens 12 des Behälters 11 beim Aufblähen des Gassackes 14 vom Lenkrad 16 unmöglich gemacht wird. Die Bewegung des Behälters 11 bzw. des Gassackes 14 mit dem Boden 12 vom Lenkrad 16 weg ist also durch das Anliegen des Kopfes 22 an den Schrägflächen 40 der Schnapphaken 21 begrenzt.

Im folgenden Ausführungsbeispiel bezeichnen gleiche Bezugszahlen gleiche Bauteile wie bei der Ausführungsform nach den Figuren 1 bis 3 und 5 bis 7.

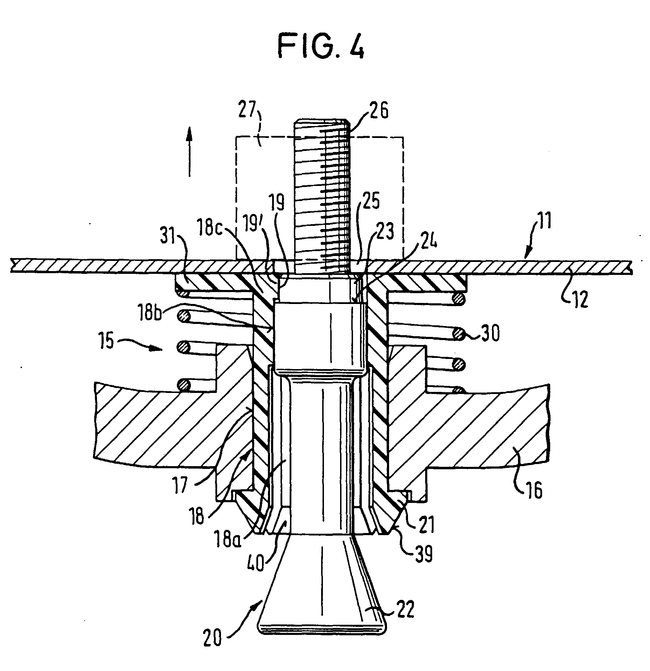

Anders als beim vorangehend beschriebenen Ausführungsbeispiel ist die Sollbruchstelle 19 bei der Ausführungsform nach Figur 4 dadurch realisiert, daß im Endbereich 18c der Schnapphülse 18 radial innen axiale Rippen 19' über den Umfang verteilt vorgesehen sind, die mit der Ringstufe 24 des Haltebolzens 20 derart zusammenwirken, daß die axiale Haltekraft des Befestigungszapfens 26 über die Ringstufe 24 und die Rippen 19' auf die Schnapphülse 18 übertragen werden. Die Rippen 19' sind erfindungsgemäß jedoch so schwach ausgebildet, daß sie bei einer Axialbelastung in Richtung des Pfeiles in Figur 7, wie sie bei Auslösung des Gasgenerators 13 auftritt, von der Schnapphülse 18 abgeschert werden, wodurch sich der Haltebolzen 20 zusammen mit dem Behälter 11 und dessen Boden 12 nach oben bewegt, bis der Kopf 22 an den Schrägflächen 40 zur Anlage kommt und somit eine weitere Bewegung des Haltebolzens 20 verhindert ist.

Wenn auch eine komplementäre Ausbildung des Kopfes 20 und der Schrägflächen 40 der Schnapphaken 21 bevorzugt ist, weil hierdurch eine besonders große Auflagefläche gewährleistet ist, würde es auch ausreichen, wenn nur eine der miteinander zusammenarbeitenden Flächen sich keilartig verjüngt, während die andere nur als entsprechende Abgleitkante ausgebildet ist, die an dem sich verjüngenden Gegenstück entlanggleiten kann. Grundsätzlich ist es auch möglich, daß sowohl die Aufnahmeöffnung zwischen den Schnapphaken 21 als auch der Kopf 22 kreiszylindrisch sind, wobei sich dann der Kopf 22 auf eine radial nach innen gerichtete Ringstufe oder radial innere Vorsprünge an den Schnapphaken 21 bzw. Federarmen 38 aufsetzen kann, nachdem der Gasgenerator 13 ausgelöst hat und die Sollbruchstelle 19 gerissen ist. Wichtig ist, daß der Kopf 22 einen kleineren Durchmesser als die Bohrung 17 hat, damit er beim Aufschnappen der Airbag-Vorrichtung auf das Lenkrad problemlos durch die Bohrung 17 hindurchgelangen kann. Weiter muß der Durchmesser des Haltebolzens 20 so gestaltet sein, daß er das Einfedern der Federarme 38 und der Schnapphaken 21 nicht behindert.

### Bezugszeichenliste

- 11: Behälter
- 12: Boden
- 13: Gasgenerator
- 14: Gassack
- 15: Befestigungsmittel
- 16: Lenkrad
- 17: Bohrung mit Eingangsschräge
- 18: Schnapphülse
- 18': oberer Teil der Schnapphülse
- 19: Sollbruchstelle
- 19': Rippe
- 20: Haltebolzen
- 21: Schnapphaken
- 22: Kopf
- 23: Befestigungsendbereich
- 24: Ringstufe
- 25: Bohrung
- 26: Befestigungszapfen
- 27: Mutter
- 28: Kontakt
- 29: Kontakt
- 30: Druckfeder
- 31: Flansch
- 32: Deckel
- 33: Blechteil
- 34: Bohrung
- 35: Gasauslaßöffnung
- 36: Gegenblech
- 37: Mittelachse
- 38: Federarm
- 39: Einlaufschräge
- 40: Schrägfläche

## Patentansprüche

1. Airbag-Vorrichtung bestehend aus einem aufbrechbaren Behälter (11), an dessen Boden (12) ein Gasgenerator (13) und ein in ihm untergebrachter, zusammengefalteter Gassack (14) befestigt sowie nach außen vorstehende Befestigungsmittel (15) zum Anbringen des Behälters (11) an einem Fahrzeuglenkrad (16) vorgesehen sind,
dadurch gekennzeichnet,
daß die Befestigungsmittel (15) aus einer am Boden (12) des Behälters (11) befestigten Schnappmitteln (18) bestehen, die unmittelbar in eine zugeordnete Bohrung (17) des Lenkrades (16) einrastbar sind, zwischen der Befestigungsstelle der Befestigungsmittel (15) am Behälter (11) und den Schnappmitteln (18) eine Solltrennstelle, insbesondere Sollbruchstelle aufweisen und nach Auftrennung der Solltrennstelle bzw. Aufbrechen der Sollbruchstelle (19) bei ausgelöstem Gasgenerator (13) durch ein Haltemittel (20) bezüglich ihrer Verriegelungsposition am Rand der Bohrung (17) fixierbar sind.

2. Airbag-Vorrichtung nach Anspruch 1,
dadurch gekennzeichnet,
daß das Schnappmittel eine Schnapphülse (18) ist, welche einseitig über die Solltrennstelle, insbesondere Sollbruchstelle (19) am Behälter (11) befestigt ist und auf der vom Behälter (11) abgewandten Seite radial einfederbare Schnapphaken (21) aufweist, die beim Einsetzen in die Bohrung (17) des Lenkrades (16) so weit radial nach innen einfedern können, daß die Schnapphülse (18) in die Bohrung (17) so weit einschiebbar ist, daß die Schnapphaken (21) hinter den vom Behälter abgewandten Rand der Bohrung (17) des Lenkrades (16) schnappen können.

3. Airbag-Vorrichtung nach Anspruch 1 oder 2,
dadurch gekennzeichnet,
daß die Haltemittel aus einem Haltebolzen (20) mit einem erweiterten Kopf (22) bestehen, dessen Durchmesser kleiner als die zugeordnete Bohrung (17) im Lenkrad (16) ist und der sich bei Auslösung des Gasgenerators (13) zwischen die Schnappmittel (18) bewegt, um dort durch geeignete Mittel wie sich keilartig verjüngende Öffnungen, Stufen oder Vorsprünge festgehalten zu werden.

4. Airbag-Vorrichtung nach Anspruch 3,
dadurch gekennzeichnet,
daß der Haltebolzen (20) mit seinem vom Kopf (22) abgewandten Befestigungsendbereich (23) zur Befestigung der Schnappmittel (18) am Behälter dient, wobei die Sollbruchstelle (19) sich zwischen dem mittels eines Befestigungsendbereiches (23) des Haltebolzens (20) befestigten Teils (18') und dem die Schnapphaken (21) tragenden Teil der Schnapphülse (18) befindet.

5. Airbag-Vorrichtung nach Anspruch 4,
dadurch gekennzeichnet,
daß der Befestigungsendbereich (23) des Haltebolzens (20) über eine Ringstufe (24) zugfest mit dem dem Behälter (11) zugewandten Teil (18') der Schnapphülse (18) verbunden ist.

6. Airbag-Vorrichtung nach Anspruch 4 oder 5,
dadurch gekennzeichnet,
daß der Befestigungsbereich (23) des Haltebolzens (20) einen durch Bohrungen (25) im Behälter (11) verlaufenden Befestigungszapfen (26) aufweist, der am Boden (12) des Behälters (11) befestigt ist.

7. Airbag-Vorrichtung nach einem der Ansprüche 3 bis 6,
dadurch gekennzeichnet,
daß der Kopf (22) des Haltebolzens (20) sich in Richtung vom Behälter (11) weg vorzugsweise konisch erweitert und mit entsprechenden Schrägflächen (40) der Schnapphaken (21) derart zusammenwirkt, daß beim Eindringen des Kopfes (22) in den Raum zwischen den Schnapphaken (21) diese radial nach außen gegen den Rand der Bohrung (17) gepreßt werden und der Haltebolzen (20) fixiert wird.

8. Airbag-Vorrichtung nach einem der vorhergehenden Ansprüche,
dadurch gekennzeichnet,
daß die Sollbruchstelle aus einer Ringnut (19) besteht.

9. Airbag-Vorrichtung nach einem der Ansprüche 1 bis 8,
dadurch gekennzeichnet,
daß die Sollbruchstelle aus an der Innenwand der Schnapphülse vorgesehenen, abscherbaren Rippen (19') oder die Solltrennstelle aus einem durchgehenden oder unterbrochenen, umlaufenden Absatz, der bei einer bestimmten Belastung den Haltebolzen (20) nach oben freigibt, besteht.

10. Airbag-Vorrichtung nach einem der vorhergehenden Ansprüche,
dadurch gekennzeichnet,
daß zwischen dem dem Behälter (11) zugewandten Ende der Schnapphülse (18) und dem die Bohrung (17) umgebenden Bereich des Lenkrades (16) ein vorgespanntes Federmittel, insbesondere eine vorgespannte Druckfeder (30) angeordnet ist, welche die eingeschnappten Schnapphaken (21) in Richtung des Behälters (11) axial gegen den Rand der Bohrung (17) drückt.

11. Airbag-Vorrichtung nach Anspruch 10,
dadurch gekennzeichnet,
daß sich an dem dem Behälter (11) zugewandten Ende der Schnapphülse (18) ein die Druckfedern (30) abstützender Flansch (31) vorgesehen ist.

12. Airbag-Vorrichtung nach Anspruch 10 oder 11,
dadurch gekennzeichnet,
daß zwischen dem Behälter (11) und dem Lenkrad (16) wenigstens ein Kontaktpaar (28, 29) angeordnet ist, welches an den Stromkreis für die Fahrzeughupe angeschlossen und normalerweise elektrisch isoliert ist, jedoch beim Drücken des Behälters (11) gegen die Kraft der Federmittel (30) in Richtung des Lenkrades (16) elektrisch leitend verbunden ist und dadurch den Hupenstromkreis schließt.

13. Airbag-Vorrichtung nach einem der vorhergehenden Ansprüche,
dadurch gekennzeichnet,
daß die Schnappmittel (18) aus Kunststoff bestehen.

14. Airbag-Vorrichtung nach einem der vorhergehenden Ansprüche,
dadurch gekennzeichnet,
daß die Haltemittel (20) aus Metall bestehen.
